# FASCICULE DE BREVET EUROPEEN

(11) **EP 1 442 784 B1**
(45) Date de publication et mention de la délivrance du brevet: **27.12.2006**
(21) Numéro de dépôt: 04290159.5
(22) Date de dépôt: 21.01.2004
(51) Int. Cl.: B01D 71/02, B01D 69/12, B01D 69/10, B01D 53/22, C01B 3/50

(54) **Membrane inorganique poreuse contenant du carbone, son procédé de préparation et son utilisation**
Anorganische, poröse und Kohlenstoff enthaltende Membran, Verfahren zu deren Herstellung und Verwendung derselben
Inorganic porous membrane containing carbon, method of manufacturing and use thereof

(30) Priorité: 31.01.2003 FR 0301091
(43) Date de publication de la demande: 04.08.2004
(73) Titulaire: Institut Français du Pétrole, 92852 Rueil-Malmaison Cedex (FR)
(72) Inventeur: Chau, Christophe, 92500 Rueil Malmaison (FR); Uzio, Denis, 69360 Simandres (FR)

(56) Documents cités:
- EP-A- 0 332 789
- EP-A- 1 281 669
- WO-A-91/12879
- RU-C- 2 179 064
- US-A- 4 636 314
- US-A- 5 503 873
- US-A- 5 637 544

## Description

La présente invention se rapporte au domaine des membranes sélectives à des molécules non-condensables. Elle a plus précisément pour objet une membrane inorganique poreuse présentant une sélectivité de séparation élevée vis-à-vis de molécules non-condensables présentes dans une charge hydrocarbonée, ainsi qu'un procédé de préparation de ladite membrane par un traitement de sélectivation et son utilisation dans des procédés de séparation.

### Art antérieur

L'obtention de gaz non-condensables, tels que l'hydrogène, l'oxygène ou l'hélium, de pureté élevée est souvent une contrainte à laquelle sont confrontés les industriels, de manière à pouvoir les utiliser dans différents procédés; par exemple en tant que réactif : c'est le cas de l'hydrogène pour les réactions d'hydrogénation et de l'oxygène pour les réactions d'oxygénation. Il est également préférable d'utiliser de l'azote de haute pureté pour l'inertage, lors du stockage industriel ou commercial de produits.

Parmi les gaz non-condensables, l'hydrogène présente un intérêt industriel et économique important. A l'échelle industrielle, l'hydrogène est produit par un certain nombre de procédés de transformation des hydrocarbures tels que le craquage catalytique en lit fluidisé (FCC selon la terminologie anglo-saxonne "Fluid Catalytic Cracking"), le vaporeformage, le reformage catalytique, la gazéification, l'oxydation partielle, le procédé autotherme, associant reformage et oxydation partielle, ou encore la cokéfaction et la viscoréduction. Par ces procédés, l'hydrogène produit est obtenu en mélange avec des hydrocarbures légers (méthane, éthane, éthylène, propane et propylène essentiellement), des oxydes de carbone en particulier. Par ailleurs, compte tenu de la demande croissante en hydrogène des industries du raffinage et de la pétrochimie, notamment pour les opérations de désulfuration ultime des carburants et plus généralement d'hydroconversion, il est particulièrement intéressant de récupérer l'hydrogène présent dans les effluents d'unités industrielles et de mettre en oeuvre une opération de séparation par membrane. La séparation par membrane nécessite alors l'utilisation de membranes sélectives à l'hydrogène pouvant être mises en oeuvre dans des conditions industrielles souvent sévères (haute température, haute pression, présence de composés chimiques réactifs, de contaminants et impuretés, par exemple).

La séparation d'oxygène présente également un enjeu commercial et industriel, car les investissements et coûts opératoires de séparation d'air par cryogénie sont particulièrement pénalisants.

Parmi les membranes sélectives à l'hydrogène, il est connu de l'état de la technique des membranes organiques, généralement de type polymère organique et sous forme de fibres creuses, et des membranes denses métalliques, généralement constituées majoritairement de palladium et d'au moins un autre métal, qui forment un alliage perméable à l'hydrogène. Ces membranes, bien que présentant des facteurs de séparation satisfaisants vis-à-vis de l'hydrogène, présentent des inconvénients pour leur mise en oeuvre. Les membranes organiques sont peu stables en présence de traces d'aromatiques, d'oléfines et d'hydrogène sulfuré notamment. Elles se dégradent chimiquement, perdent leurs propriétés à des températures supérieures à 90-120°C et imposent une pression élevée de la charge, en général dans la gamme 5-9 MPa. Les membranes métalliques nécessitent quant à elles d'opérer à une température élevée, en général de l'ordre de 400-500°C, et les flux d'hydrogène à travers ces membranes denses demeurent faibles à très faibles. Par ailleurs, ces membranes sont particulièrement sensibles à l'effet de molécules comme le monoxyde de carbone CO, le dioxyde de carbone CO₂, l'hydrogène sulfuré H₂S, les oléfines, qui inhibent, empoisonnent ces membranes ou se dissolvent dans le métal (formation de sulfures et carbures métalliques), limitant le flux d'hydrogène à travers la membrane. En outre, la perméabilité à l'hydrogène de ces membranes organiques et métalliques, qui sont des matériaux denses, reste faible.

Il est également connu d'utiliser des membranes inorganiques poreuses, notamment des membranes zéolithiques, pour réaliser la séparation de gaz. Leurs propriétés de texture, (porosité uniforme, distribution de taille de pores très étroite) et la topologie de ces solides leur confèrent en effet un potentiel intéressant en séparation, qui est notamment basée sur la sélectivité diffusionnelle et thermodynamique (séparation par effet de taille, exclusion stérique et tamisage moléculaire). Les propriétés de surface (polarité, caractère hydrophile ou hydrophobe) induisent des sélectivités de séparation par adsorption différentielle et interactions préférentielles entre la surface de la membrane et certaines molécules d'un mélange. Ces propriétés texturales et de polarité de surface, plus généralement les propriétés physico-chimiques de la membrane zéolithique, peuvent être ajustées au cours de la synthèse du matériau (stoechiométrie et nature des précurseurs, mode d'obtention du matériau, insertion directe d'atomes de substitution dans le réseau cristallin de la zéolithe notamment) et/ou de la modification post-synthèse (échange ionique dont échange cationique, imprégnation d'espèces chimiques, modification de surface par greffage chimique en phase liquide ou vapeur, traitement à la vapeur d'eau notamment). La nature de ces traitements, en particulier le traitement à la vapeur d'eau et l'échange cationique, lequel nécessite une forte agitation mécanique, est peu adaptée à la modification de membranes inorganiques poreuses et ces traitements sont encore mal maîtrisés. Ces traitements, nécessitant plusieurs étapes, parfois à des températures différentes, des immersions dans des solutions de salinité, d'alcalinité ou de basicité variable, des calcinations à haute température, peuvent entraîner des fissurations sur la couche sélective de la membrane et induire des défauts sur le matériau final avec pour conséquence la perte des propriétés de séparation de tels matériaux.

En particulier, concernant la séparation hydrogène/hydrocarbures au moyen d'une membrane zéolithique, il est connu qu'à basse température, les hydrocarbures s'adsorbent fortement et préférentiellement à la surface ou dans la porosité de la zéolithe. L'hydrogène, quant à lui, ne peut s'adsorber sur la zéolithe et en conséquence, il ne traverse pas ou très difficilement la couche séparatrice et sélective de la membrane zéolithique. Sous l'effet d'un gradient de potentiel chimique (concentrations pour les liquides ou pressions partielles pour les gaz), les hydrocarbures diffusent, en phase adsorbée, à travers la porosité de la membrane zéolithique et traversent ainsi la couche séparatrice et sélective de la membrane, pour être récupérés dans le perméat. L'hydrogène est récupéré en présence d'une teneur résiduelle en hydrocarbures dans le rétentat, du côté de la membrane où circule la charge. Aux températures élevées, par exemple à 150-200°C, pour la séparation d'un mélange H₂/nC₄ au moyen d'une membrane zéolithique de type structural MFI, les phénomènes d'adsorption sont moins marqués et la diffusion devient majoritaire. Les hydrocarbures s'adsorbant moins fortement sur la surface ou dans la porosité de la membrane, l'hydrogène diffuse et il est récupéré en partie dans le perméat. La séparation est en général limitée et des hydrocarbures se retrouvent majoritairement dans le rétentat. La séparation H₂/hydrocarbures au moyen de membranes inorganiques poreuses demeure ainsi limitée et il est difficile, à ce jour, de séparer ou d'extraire l'hydrogène présent dans un mélange hydrocarboné avec une sélectivité élevée.
Aussi la présente invention se propose de remédier aux inconvénients rencontrés tant avec les membranes denses, de nature organique ou métallique; qu'avec les membranes inorganiques poreuses en fournissant une membrane inorganique poreuse sélective et perméable à des molécules non-condensables qui permette de réaliser la séparation desdites molécules présentes dans des mélanges hydrocarbonés avec une sélectivité de séparation élevée vis-à-vis de telles molécules.

### Description de l'invention

L'objet de la présente invention est une membrane inorganique poreuse comportant au moins une phase inorganique douée de propriétés séparatrices, ladite membrane étant caractérisée en ce qu'elle présente une teneur en carbone représentant de 0,05 à 25 % en poids par rapport à la masse de ladite phase inorganique et en ce que le carbone y est réparti graduellement dans la porosité, comme précisé ci-après et dans la revendication 1.
La membrane selon l'invention est perméable et sélective aux molécules non-condensables dont les dimensions sont inférieures à 0,8 nm (nanomètre), de manière préférée inférieures à 0,6 nm et de manière encore plus préférée inférieures à 0,5 nm. De préférence, les molécules non-condensables auxquelles la membrane selon l'invention est sélective et perméable sont les gaz non-condensables choisis parmi l'hydrogène, l'azote, l'oxygène, l'hélium, l'hydrogène sulfuré H₂S, le méthane, le monoxyde de carbone CO et le dioxyde de carbone CO₂.
La membrane inorganique poreuse selon l'invention présente avantageusement une teneur en carbone représentant de 0,1 à 10 %, et très avantageusement de 1 à 8 %, en poids par rapport à la masse de la phase inorganique douée de propriétés séparatrices, le carbone étant réparti graduellement dans la porosité de la membrane.
Selon l'invention, la phase inorganique douée de propriétés séparatrices permet de réaliser la séparation sélective des molécules non-condensables citées ci-dessus et présentes dans une charge hydrocarbonée. Ladite phase inorganique présente une perméabilité et une sélectivité élevées auxdites molécules.
Conformément à l'invention, le carbone est présent dans au moins une partie des pores de la membrane selon l'invention et/ou au voisinage de ceux-ci. Il est réparti graduellement dans la porosité de la membrane : il n'est pas réparti de façon homogène dans l'ensemble du réseau poreux de la membrane. Le gradient de carbone est tel que la teneur en carbone représente préférentiellement de 1 à 3 % poids par rapport à la masse du premier tiers de la phase inorganique douée de propriétés séparatrices, de 6 à 8 % poids par rapport à la masse du deuxième tiers de la phase inorganique douée de propriétés séparatrices et de 15 à 20 % poids par rapport à la masse du troisième tiers de la phase inorganique douée de propriétés séparatrices.
Conformément à l'invention, la membrane inorganique poreuse est choisie parmi les membranes zéolithiques, les membranes zéolithiques modifiées, les membranes alumino-silicates, les membranes silice, les membranes alumine et les membranes composites. Les membranes composites sont obtenues avec des phases inorganiques différentes, comme par exemple les membranes zéolithiques supportées sur alumine, sur verre, sur silice, sur carbone ou sur métal. Les membranes zéolithiques modifiées peuvent être notamment des membranes zéolithiques contenant un ou plusieurs élément(s) de transition, notamment le titane, le bore, le germanium et le gallium. Parmi les membranes zéolithiques, celles dont la zéolithe est de type structural MFl, LTA, SOD, CHA, ANA, ERI, TON, AEL, EUO, MEL, MTT et FAU sont préférées. Toutes ces membranes sont bien connues de l'état de la technique.
La phase inorganique douée de propriétés séparatrices est donc préférentiellement choisie parmi les zéolithes, les zéolithes modifiées, les alumino-silicates, les alumines, les silices et le mélange de deux ou plusieurs de ces phases. Il va de soi que ladite phase inorganique douée de propriétés séparatrices est poreuse.

Des méthodes de préparation des membranes selon l'invention sont par exemple décrites dans EP-A1-1 230 972, dans US 6,090,289, US 6,140,263, US 5,723,397 et dans WO 96/01683 et WO 00/33948.
La membrane inorganique poreuse selon l'invention est inactive sur le plan catalytique et est dépourvue de tout type d'élément catalytique au sein de son réseau poreux.
De manière générale, la préparation d'une membrane inorganique selon l'invention, et particulièrement d'une membrane zéolithique, comprend : a) au moins la formation d'un gel (ou d'une solution) contenant au moins les précurseurs de ladite membrane, de préférence au moins une source de silicium et de l'eau, additionnée éventuellement d'un composé organique ; b) la cristallisation de la phase inorganique douée de propriétés séparatrices, préférentiellement une zéolithe ; et c) l'élimination d'agents résiduels. Des éléments tels que le bore, le germanium, le gallium ou le titane peuvent être introduits lors de l'étape a). L'élimination des agents résiduels dans l'étape c) est généralement effectuée par traitement thermique réalisé entre 350 et 550°C, selon une programmation de températures variables ou selon un palier isotherme, dans un four sous atmosphère d'air ou sous atmosphère N₂/O₂ dans des proportions variables. Une étape de lavage avec de l'eau, suivi de séchage et de calcination selon les techniques connues de l'homme du métier peut être également appliquée.
La membrane selon l'invention peut être de géométrie tubulaire, plane, spiralée ou encore sous la forme de fibres creuses ou de monolithes multi-canaux. D'autres géométries peuvent également convenir. La préférence sera donnée à tout système permettant de mettre en oeuvre des surfaces de membranes importantes dans un module compact, ce qui permet de traiter des débits de charge élevés avec un système compact en limitant l'encombrement, l'investissement et les coûts opératoires.
Selon un mode préféré de réalisation de la membrane selon l'invention, la membrane inorganique poreuse est supportée. Tout type de support inorganique peut être utilisé, comme par exemple, la silice, l'alumine, le verre, le carbone, la zircone, l'oxyde de titane, l'argile, un métal poreux, ou une association de ces matériaux. Le support peut être de géométrie tubulaire, plane, spiralée ou encore sous la forme de fibres creuses ou de monolithes mufti-canaux, mais toute géométrie peut *a priori* convenir. En particulier, les supports et les membranes spiralés, tubulaires ou sous forme de fibres creuses, permettent d'opérer des modules et des unités compactes (rapport surface de membrane sur volume de l'équipement élevé). Pour la préparation d'une membrane supportée, il convient généralement de mettre en contact le gel ou la solution contenant au moins les précurseurs de ladite membrane avec un support tels que ceux décrits ci-dessus.
De préférence, la membrane inorganique poreuse selon l'invention est une membrane de type microporeuse, mésoporeuse ou macroporeuse. Par membrane microporeuse on entend toute membrane dont la taille des pores est strictement inférieure à 2 nm (nanomètres). Par membrane mésoporeuse, on entend toute membrane dont la taille de pores est comprise entre 2 nm et 50 nm selon la définition de l'IUPAC. Selon l'invention, on entend par membrane macroporeuse, les membranes dont les dimensions des pores sont supérieures à 50 nm et inférieures à 200 nm et de préférence comprises entre 50 et 100 nm.
La porosité de ladite membrane inorganique poreuse selon l'invention peut être soit uniforme soit graduelle. La porosité de la membrane est dite uniforme lorsque la taille des pores est homogène dans l'ensemble du réseau poreux de la membrane, c'est-à-dire lorsque la distribution de taille de pores est étroite. La porosité de la membrane est dite graduelle lorsque la taille des pores n'est pas homogène dans l'ensemble du réseau poreux de la membrane et qu'elle augmente graduellement sur la surface. La variation graduelle peut, selon les géométries de la membrane, être modulée par exemple longitudinalement, axialement ou radialement. La différence de taille de pores, également appelée gradient de porosité, dans le réseau poreux est avantageuse pour contrôler de façon optimale la perméabilité de la membrane et/ou la sélectivité de la séparation. Par exemple, sur le premier tiers de surface de la membrane, la taille des pores est comprise entre 10 et 20 nm, de préférence entre 10 et 15nm, sur le deuxième tiers de surface de la membrane, la taille des pores est comprise entre 2 et 5 nm, de préférence entre 2 et 3 nm et sur le troisième tiers de surface de la membrane, la taille des pores est inférieure à 1 nm, de préférence inférieure à 0,8 nm. De telles membranes à gradient de porosité sont déjà connues : par exemple, la membrane inorganique de porosité contrôlée de type Membralox®, commercialisée par Vivendi est une membrane tubulaire à gradient de porosité longitudinal. Un autre exemple, non limitatif, concerne une membrane zéolithique supportée sur alumine mésoporeuse : le support, peut être constitué sur toute sa longueur d'alumine poreuse de 10 nm, recouvert par de l'alumine de variété allotropique gamma avec une porosité de 5 nm sur le deuxième tiers de surface de la membrane, et recouvert de zéolithe MFI de porosité 0,55 nm obtenue par synthèse hydrothermale sur le troisième tiers de surface de la membrane.
La membrane inorganique poreuse selon l'invention présente une perméabilité et une sélectivité élevées aux molécules non-condensables et préférentiellement aux gaz non-condensables H₂, O₂, N₂, He, H₂S, CH₄, CO, CO₂. En particulier, les performances séparatrices de la membrane selon l'invention sont nettement améliorées par rapport aux membranes inorganiques poreuses connues de l'art antérieur et ne contenant pas de carbone. Elle présente également des propriétés très satisfaisantes en termes de stabilité chimique et thermique.
Un autre objet de l'invention est un procédé de préparation de la membrane selon l'invention comprenant un traitement sélectivant d'une membrane inorganique poreuse dépourvue de carbone visant à déposer dans les pores de ladite membrane inorganique poreuse dépourvue de carbone et au voisinage de ceux-ci une quantité de carbone telle que la membrane selon l'invention présente une teneur en carbone représentant de 0,05 à 25 %, de préférence de 0,1 à 10 % et de manière très préférée de 1 à 8 %, en poids par rapport à la masse de la phase inorganique douée de propriétés séparatrices, le carbone étant réparti graduellement dans la porosité de la membrane.
Le procédé selon l'invention comprend une étape a) consistant en la mise en contact d'une membrane inorganique poreuse dépourvue de carbone et comportant au moins une phase inorganique douée de propriétés séparatrices avec une charge hydrocarbonée, dans une gamme de température comprise entre 20 et 550°C suivie d'une étape b) consistant en la mise en contact de la membrane issue de l'étape a) avec une charge hydrocarbonée dans une gamme de température comprise entre 20 et 550°C. La durée de la mise en contact dans l'étape a) est préférentiellement comprise entre 1 minute et 3 jours, de manière très préférée entre 30 minutes et 12 heures. La durée de la mise en contact dans l'étape b) est préférentiellement comprise entre 1 minute et 2 jours, de manière très préférée entre 1 minute et 6 heures. La température mise en oeuvre dans l'étape b) est préférentiellement supérieure à celle mise en oeuvre dans l'étape a). La température mise en oeuvre dans l'étape a) est de préférence comprise entre 50 et 120°C et celle mise en oeuvre dans l'étape b) est de préférence comprise entre 120 et 220°C, de préférence entre 120 et 180°C. La pression mise en oeuvre dans les étapes a) et b) est préférentiellement comprise entre 0,1 et 10MPa.
La membrane issue de l'étape a) est avantageusement maintenue, avant d'être soumise à l'étape b), à une température supérieure à celle pour la mise en oeuvre de l'étape a) pendant une période de 1 minute à 6 heures. Par exemple, elle est maintenue à une température comprise dans une gamme 120-220°C.
Il est préféré que le débit de charge hydrocarbonée soit supérieure dans l'étape b) que dans l'étape a). Par exemple, la quantité molaire de charge hydrocarbonée injectée dans l'étape b) représente 30 à 200%, de préférence 50 à 150% de celle injectée dans l'étape a).
La membrane issue de l'étape b) peut être soumise à une ou plusieurs mise(s) en contact subséquente(s) avec une charge hydrocarbonée.
La membrane issue de l'étape b) est avantageusement maintenue, avant d'être soumise à toute autre mise en contact subséquente avec une charge hydrocarbonée, à une température supérieure à celle pour la mise en oeuvre de l'étape b) pendant une période de 10 minutes à 5 heures. Par exemple, elle est maintenue à une température comprise dans une gamme 150-250°C, de préférence dans une gamme 180-230°C.
Selon le procédé de l'invention, la charge hydrocarbonée utilisée pour le traitement sélectivant de la membrane inorganique poreuse dépourvue de carbone et comportant au moins une phase inorganique douée de propriétés séparatrices est avantageusement choisie parmi les oléfines, les polyoléfines, les acétylènes, les polyacétylènes, les aromatiques, les polyaromatiques, les molécules comportant un ou plusieurs noyau(x) aromatique(s) avec une ou plusieurs chaîne(s) hydrocarbonée(s), par exemple de type oléfine ou acétylène, les molécules hydrocarbonées contenant des hétéroatomes, tels que N, O, S, Si, P, et les molécules hydrocarbonées contenant des groupements fonctionnalisés tels que par exemple des groupements de type sulfonique SO₃H, carboxyliques, phosphoriques, phosphoniques, chlore ou brome. Les molécules nécessaires pour la fonctionnalisation peuvent être utilisées seules, en mélange entre elles ou en présence d'un diluant, gaz, liquide ou vapeur. Dans le cas d'une dilution, les hydrocarbures représentent préférentiellement 1 à 65% et de manière plus préférée 5 à 50% en volume de la quantité totale injectée, à charge hydrocarbonée ajoutée à un diluant.
Le dépôt de la charge hydrocarbonée dans les pores de la membrane inorganique poreuse dépourvue de carbone et au voisinage de ceux-ci peut être réalisé par adsorption chimique ou physique, cokage, oligomérisation ou greffage chimique par réaction.
Selon un premier mode de réalisation du procédé selon l'invention, les étapes a) et b) sont réalisées à une température donnée et fixe : le traitement sélectivant de ladite membrane inorganique poreuse avec ladite charge hydrocarbonée est isotherme. Selon un deuxième mode de réalisation du procédé selon l'invention, les étapes a) et b) sont réalisées par la mise en oeuvre d'une programmation thermique non-isotherme. Cette programmation thermique non-isotherme peut par exemple comporter au moins deux étapes constituées par une montée en température entre 25 et 550°C, suivie d'une redescente en température, par exemple inférieure à 200°C, voire de préférence inférieure à 100°C pour l'étape a). La programmation thermique non-isotherme peut aussi comporter successivement au moins trois étapes constituées par une montée en température entre 50°C et 400°C, par un palier de température de durée variable, par exemple de 1 minute à 48 heures, et par une redescente en température, par exemple inférieure à 200°C. D'autres programmations thermiques non-isothermes peuvent bien évidemment être envisagées.
La membrane inorganique poreuse dépourvue de carbone et soumise audit traitement sélectivant avec ladite charge hydrocarbonée est choisie parmi les membranes zéolithiques, les membranes zéolithiques modifiées, les membranes alumino-silicates, les membranes silice, les membranes alumine et les membranes composites. Les membranes composites sont obtenues avec des phases inorganiques différentes comme par exemple les membranes zéolithiques supportées sur alumine, sur verre, sur silice, sur carbone ou sur métal. Les membranes zéolithiques modifiées peuvent être notamment des membranes zéolithiques contenant un ou plusieurs élément(s) de transition comme le titane, le bore, le germanium, ou le gallium. Parmi les membranes zéolithiques, celles dont la zéolithe est de type structural MFI, LTA, SOD, CHA, ANA, ERI, TON, AEL, EUO,
MEL, MTT et FAU sont préférées. Toutes ces membranes sont bien connues de l'état de la technique.
Ladite membrane inorganique poreuse dépourvue de carbone est une membrane de type microporeuse, mésoporeuse ou macroporeuse. Les définitions des termes microporeux, mésoporeux et macroporeux au sens de la présente invention sont données plus haut dans cette description de l'invention. Ladite membrane inorganique poreuse dépourvue de carbone peut présenter une porosité uniforme ou graduelle.
Lorsqu'il s'agit d'utiliser la membrane inorganique poreuse selon l'invention pour la séparation d'un gaz non condensable contenu dans une charge hydrocarbonée, le traitement sélectivant de la membrane inorganique dépourvue de carbone et comportant au moins une phase inorganique douée de propriétés séparatrices est avantageusement réalisée directement avec ladite charge hydrocarbonée contenant le gaz à séparer (traitement *in situ*).
Le traitement sélectivant au moyen d'une charge hydrocarbonée de ladite membrane inorganique poreuse dépourvue de carbone est également particulièrement adapté pour la suppression de défauts ou de fissures dans une telle membrane. En effet, le dépôt d'espèces hydrocarbonées, le carbone étant réparti graduellement dans la porosité, peut se faire dans les défauts de la phase inorganique douée de propriétés séparatrices et ainsi limiter la présence de défauts, sans propriétés de séparation, dans une membrane.
La présence de coke et/ou d'espèces hydrocarbonées réparti(es) graduellement dans les pores de la membrane selon l'invention et au voisinage de ceux-ci permet de modifier et de moduler les propriétés texturales ainsi que la polarité de surface du matériau. Par le bouchage au moins partiel des pores au moyen de carbone, réparti graduellement dans la porosité, entraînant une réduction de la taille des pores et/ou un empoisonnement des sites actifs acides de surface, la membrane inorganique selon l'invention démontre des performances séparatrices très satisfaisantes et considérablement améliorées par rapport à une membrane inorganique poreuse dépourvue de carbone ou une membrane inorganique poreuse contenant du carbone, le carbone y étant réparti de façon uniforme.
La membrane inorganique poreuse selon l'invention est adaptée pour être utilisée dans la séparation de molécules non-condensables contenues dans une charge hydrocarbonée, ladite séparation pouvant être réalisée dans un large domaine de température, de préférence entre 10 et 600°C; de pression, de préférence entre 0,1 et 15 MPa, et de concentration de molécules chimiques, notamment hydrocarbures et gaz, issues d'unités du raffinage, de la pétrochimie et du traitement du gaz. La membrane selon l'invention est particulièrement adaptée pour être utilisée dans la séparation sélective de gaz non-condensables choisis parmi l'hydrogène, l'oxygène, l'hélium, l'azote, l'hydrogène sulfuré H₂S, le monoxyde de carbone CO, le dioxyde de carbone CO₂ et le méthane, contenus dans une charge hydrocarbonée, par exemple, un effluent issu d'une unité de raffinerie ou de pétrochimie.
La membrane inorganique poreuse selon l'invention peut être utilisée dans une opération unitaire de séparation, ou en combinaison avec une autre opération de séparation, comme la distillation, l'adsorption, l'absorption par solvant, ou bien encore en association avec d'autres opérations de séparation par membrane.

Un autre objet de la présente invention est l'utilisation de la membrane selon l'invention en association avec au moins un catalyseur. L'association de la membrane selon l'invention à un catalyseur permet ainsi de coupler la séparation d'un gaz non-condensable, de préférence l'hydrogène et l'oxygène, contenu dans une charge hydrocarbonée avec une réaction catalytique. Tout type de catalyseur connu de l'homme du métier peut être utilisé en association avec la membrane selon l'invention. Ledit catalyseur se présente généralement sous forme divisée, par exemple sous forme de billes, de grains ou d'extrudés. L'association de la membrane de l'invention avec un catalyseur peut revêtir différentes formes. Le catalyseur et la membrane peuvent être associés dans un même réacteur de manière à former un réacteur membranaire qui se présente préférentiellement sous forme tubulaire, mais toute géométrie est *a priori* envisageable. Le catalyseur et la membrane selon l'invention peuvent également être associés en couplant ladite membrane à un réacteur catalytique, le réacteur catalytique et la membrane formant deux entités distinctes. L'association de la membrane selon l'invention à un catalyseur est avantageusement utilisée pour réaliser des réactions d'hydroconversion d'hydrocarbures, lesquelles nécessitent de l'hydrogène. Par exemple, l'association membrane/catalyseur est utilisée dans les réactions d'hydrogénation, notamment d'hydrogénation sélective, d'hydroisomérisation et d'hydrodésulfuration pour coupler une distribution d'hydrogène avec l'une de ces réactions. Selon ce mode de réalisation de l'invention consistant à utiliser la membrane selon l'invention en association avec un catalyseur pour réaliser des réactions d'hydroconversion de charges hydrocarbonées, et préférentiellement des réactions d'hydrogénation de composés insaturés, la membrane selon l'invention est sélective à l'hydrogène et joue le rôle de distributeur sélectif d'hydrogène au niveau du lit catalytique, en aval de la membrane ; l'hydrogène, mis au contact direct de la face amont de la membrane selon l'invention et ayant traversé sélectivement ladite membrane, se retrouve ainsi dans l'espace aval de la membrane où il réagit dans la zone réactionnelle du réacteur avec la charge hydrocarbonée. Les conditions opératoires pour la mise en ceuvre d'une telle réaction d'hydroconversion, et préférentiellement d'une réaction d'hydrogénation, sont généralement les suivantes :
- pression d'alimentation de la charge hydrocarbonée : de 0,1 à 6 MPa, de préférence de 0,2 à 5 MPa et de manière plus préférée de 0,7 à 4 MPa ;
- pression d'hydrogène (en amont de la membrane) : de 0,1 à 3 MPa, de manière plus préférée de 0,2 à 2 MPa et de manière encore plus préférée de 0,2 à 1,5 MPa.
- température : de 5 à 300°C, de préférence de 10 à 200°C et de manière plus préférée 15 à 150°C.
- vitesse volumique horaire (VVH) de la charge contenant le(s) composé(s) à hydrogéner: de 0,05 à 50 h⁻¹, de préférence de 1 à 20 h⁻¹ et de manière plus préférée de 2 à 10 h⁻¹ par rapport au catalyseur mis en jeu dans la réaction d'hydrogénation.

L'association de la membrane selon l'invention à un catalyseur est également avantageusement utilisée pour réaliser des réactions d'oxydation notamment des réactions d'oxydation partielle. Il peut s'agir par exemple de l'oxydation de composés organiques tels que les oléfines, les acétyléniques, les alcanes, les naphtènes et les alkylaromatiques.
Lorsque la membrane selon l'invention présente une porosité graduelle (gradient de porosité) et qu'elle est utilisée en association avec un catalyseur dans un réacteur catalytique membranaire, il est préféré, par exemple, que la taille des pores de la membrane soit plus élevée sur la fraction de membrane située à proximité de l'entrée dudit réacteur où la charge hydrocarbonée contenant les composés à convertir est introduite, que sur la fraction de membrane éloignée de l'entrée du réacteur.

### EXEMPLES

Les exemples suivants illustrent l'invention et ne doivent en aucun cas être considérés comme limitatifs.

### Exemple 1 : membrane zéolithique MFI dépourvue de carbone (non conforme à l'invention)

Dans cet exemple, une membrane zéolithique de type MFI (selon la nomenclature IUPAC), supportée sur un tube d'alumine poreuse, est préparée selon le mode suivant : ILa membrane est préparée par cristallisation hydrothermale d'une solution contenant du silicium (Aérosil 380, Degussa), de l'hydroxyde d'ammonium tétrapropylé TPAOH (Fluka) et de l'eau (solution de stoechiométrie 1SiO₂, 0,4 TPAOH, 22,3 H₂O), soumise durant 72 h à un traitement à 175°C, en présence d'un support d'alumine de variété allotropique alpha (Pall), de géométrie tubulaire. La membrane obtenue, de géométrie tubulaire, est calcinée sous air à 450°C afin de dégrader le composé organique TPAOH. La caractérisation par diffraction des rayons X et la perméation de gaz (nC₄H₁₀/iC₄H₁₀) confirme que la membrane est une membrane zéolithique MFI (diamètre des pores de 0,55 nm environ) supportée sur alumine.
La membrane MFI obtenue est utilisée pour séparer de l'hydrogène dans un mélange contenant de l'hydrogène, du butadiène et de l'argon. Du butadiène mélangé à de l'argon (11,1 % et 88,9 % respectivement, débit total 16,6 mL/mn sous 0,1 MPa) est introduit dans l'espace interne (aval) de la membrane (surface interne de la membrane). Dans l'espace externe (amont) de la membrane, de l'hydrogène (58,4 % dans de l'argon) est introduit (3,3 mL/mn, 0,1 MPa), au contact de la surface externe (face amont) de la membrane. La séparation est réalisée à une température de 30°C et sous une pression de 0,1 MPa. L'effluent (rétentat) résultant de cette expérience admet les compositions suivantes : H₂/Butadiène/Ar: 4,4/6,5/89,1%, avec un rapport H₂/butadiène égal à 0,68. Par ailleurs, les flux ayant traversé la membrane (perméat) contiennent 8,6% de butadiène (et également 46,6% d'hydrogène et 44,9% d'argon).

Les résultats montrent que la membrane permet non seulement le transfert d'hydrogène, mais également celui des hydrocarbures. Le facteur de séparation (égal ici au rapport des concentrations d'hydrogène dans le perméat 46,6% et dans l'alimentation externe 58,4%divisé par le rapport de concentrations de butadiène dans le perméat 8,6% et dans l'alimentation interne 11,1 %) est proche de 1.

La membrane MFI ainsi préparée est également caractérisée par perméation de butane linéaire (diamètre cinétique 0,43 nm) et isobutane (0,49 nm). Durant les mesures de perméation de gaz, la membrane est soumise à une différence de pression, la pression du côté amont où circule la charge (du butane linéaire n-C₄H₁₀ pur ou de l'isobutane pur i-C₄H₁₀) est maintenue constante à 0,15 MPa absolus et la pression du côté aval, où l'on récupère le perméat après extraction sélective d'une partie des molécules présentes dans la charge, est la pression atmosphérique. Cette différence de pression constitue la force motrice du transfert à travers la membrane. Le débit de gaz traversant la membrane est mesuré au moyen d'un débitmètre volumique. Le seuil de détection est inférieur à 0,002 mL/mn soit environ 10⁻⁶ mol/m².s de n-butane ou isobutane. La mesure des débits de gaz traversant la membrane est effectuée avec les corps purs n-butane et isobutane. Durant les mesures de perméation de gaz, la température est maintenue à 180°C. La membrane est également traitée sous flux de gaz inerte à 200°C entre les mesures de perméation de butane linéaire et ramifié. La perméance au n-butane est égale à 2,2.10⁻⁷.mol nC₄H₁₀/m².s.Pa et celle à l'isobutane est égale à 0,13 mol iC₄H₁₀/m².s.Pa.

### Exemple 2 : membrane zéolithique MFI contenant du carbone (non conforme à l'invention)

La membrane zéolithique MFI obtenue dans l'exemple 1 est soumise à un traitement sélectivant de manière à ce qu'elle contienne une teneur en carbone qui représente 6,5% poids par rapport à la masse de la phase zéolithique MFI. La face externe (amont) de la membrane (côté alimentation et rétentat) est maintenue sous atmosphère de 1,3-butadiène dilué dans de l'argon (10% en volume, à une vitesse volumique de 79 micromoles/mn de butadiène) sous une pression de 0,1 MPa pendant 5 h. De l'hydrogène (84 micromoles/mn, 55%) est utilisé pour balayer la face interne (aval) de la membrane (côté perméat). La température suit une programmation (1°C/mn) entre 30 et 90°C puis un retour à température ambiante (25°C) est programmée. Après retour à température ambiante, la membrane zéolithique MFI présente une teneur en carbone représentant 6,5% poids par rapport à la masse de la phase zéolithique MFI.
Dans les mêmes conditions que celles décrites dans l'exemple 1, du butadiène mélangé à de l'argon (11,0% et 89,0% respectivement, débit total 17,0 mL/mn sous 0,10MPa) est introduit dans l'espace interne (aval) de la membrane ainsi préparée (surface interne de la membrane). Dans l'espace externe (amont) de cette membrane, de l'hydrogène (58,6% dans de l'argon) est introduit (3,3 mL/mn, 0,10MPa), au contact de la surface externe (face amont) de la membrane. L'effluent (rétentat) résultant de cette expérience admet les compositions suivantes: H₂/Butadiène/Ar: 4,5/10,4/85,2%, avec un rapport H₂/butadiène égal à 0,43. Par ailleurs, les flux ayant traversé la membrane (perméat) contiennent 0,2% de butadiène (et également 50,2% d'hydrogène et 49,6% d'argon). Le facteur de séparation (égal ici au rapport des concentrations d'hydrogène dans le perméat 50,2% et dans l'alimentation externe 58,6% divisé par le rapport de concentrations de butadiène dans le perméat 0,2% et dans l'alimentation interne 11,0%) atteint la valeur de 47.

La membrane montre ainsi des propriétés de séparation très élevées et nettement améliorées par rapport à une membrane n'ayant pas été traitée par une charge hydrocarbonée (cf. exemple 1). La membrane est hautement sélective et perméable à l'hydrogène. Cette amélioration des performances apparaît liée à une modification des propriétés de texture (porosité) et de polarité de surface, par dépôt d'espèces hydrocarbonées dans la porosité et/ou à son voisinage.

### Exemple 3 : utilisation d'une membrane MFI en association avec un catalyseur dans une réaction d'hydrogénation sélective du butadiène (non conforme à l'invention).

La membrane inorganique poreuse MFI obtenue dans l'exemple 2 est associée à des grains de catalyseur divisé de type LD271 (2,8g, Axens), à base de palladium supporté sur alumine, lesquels sont introduits dans l'espace interne (aval) de ladite membrane zéolithe sous forme tubulaire. L'alimentation (19,4mUmn, 0,105 MPa, butadiène 10,4%, hydrogène 3,4%, argon 86,2%) est introduite dans l'espace interne (aval) de la membrane, au contact du catalyseur maintenu à 30°C. Le rapport hydrogène sur butadiène vaut 0,32. La vélocité spatiale en poids (en dénomination anglosaxonne Weight Hourly Space Velocity) est 0,1 h⁻¹ (en gramme de butadiène par heure et par gramme de catalyseur). Dans l'espace externe (amont) de la membrane, de l'hydrogène est introduit au contact de la face amont de la membrane (28,9 ml/mn, 0,105 MPa, 100% H₂). Cet hydrogène, qui représente 68% de l'hydrogène nécessaire à la réaction d'hydrogénation sélective diffuse sélectivement à travers la membrane et réagit ensuite au niveau du lit catalytique dans l'espace aval de la membrane.
Dans ces conditions, la conversion du butadiène, mesurée par chromatographie en phase gazeuse, atteint 99,1% et la sélectivité en produit d'hydrogénation sélective, les butènes, atteint 98,6%. La membrane permet de distribuer l'hydrogène nécessaire pour la réaction vers le catalyseur. La diffusion à travers la membrane se fait de manière contrôlée et permet ainsi d'obtenir des conversions de butadiène élevées, avec des sélectivités de réaction très élevées (les butènes étant produits très majoritairement).

### Exemple 4 : membrane zéolithique MFI contenant un dépôt graduel de carbone (conforme à l'invention).

Dans cet exemple, deux membranes zéolithiques MFI analogues à celle obtenue dans l'exemple 1 sont soumises à un traitement thermique en présence de molécules hydrocarbonées insaturées, de manière à sélectiver la phase inorganique par du carbone (phase zéolithique MFI). Les membranes, de géométrie tubulaire, sont introduites dans un four asservi à un programmateur de température. Les faces externe et interne de chaque membrane sont mises en contact avec du 1,3-butadiène dilué dans de l'argon (10% en volume, 85 micromoles/mn de butadiène) sous une pression de 0,1 MPa pendant 2 h à 60°C. La température est ensuite augmentée (2°C/mn) à 120°C et maintenue 30mn. A ce stade, la teneur en butadiène est augmentée (25% en volume, 175 micromoles/mn), à la même pression, durant 20mn. La température est enfin augmentée (2°C/mn) à 180°C en présence de butadiène pur, sur une durée de 10mn. La température est maintenue 2h à 180°C.
Après retour à température ambiante, une des deux membranes est soumise à analyse de carbone. Cette membrane zéolithique MFI présente une teneur globale en carbone représentant 7,5% poids par rapport à la masse de la phase zéolithique MFI. Une analyse est effectuée sur trois segments de la membrane, de longueur égale et représentant chacun le tiers de la longueur totale de la membrane tubulaire, selon l'axe. Cette analyse révèle un dépôt de carbone graduel : la teneur en carbone représente 1 % poids par rapport à la masse du premier tiers de la phase inorganique douée de propriétés séparatrices, 6% poids par rapport à la masse du deuxième tiers de la phase inorganique et 16% poids par rapport à la masse du troisième tiers de la phase inorganique douée de propriétés séparatrices.

Dans les mêmes conditions que celles décrites dans l'exemple 1, du butadiène mélangé à de l'argon (11,0% et 89,0% respectivement, débit total 17,0 mL/mn sous 0,10MPa) est introduit dans l'espace interne (aval) de la deuxième membrane ainsi préparée. Dans l'espace externe (amont) de cette membrane, de l'hydrogène (58,6% dans de l'argon) est introduit (3,3 mL/mn, 0,10MPa). L'effluent (rétentat) résultant de cette expérience admet les compositions suivantes: H₂/Butadiène/Ar: 4,4/10,2/85,4%, avec un rapport H₂/butadiène égal à 0,43. Par ailleurs, les flux ayant traversé la membrane (perméat) ne contiennent pas de butadiène détectable (dans un mélange hydrogène et d'argon). Le facteur de séparation (égal ici au rapport des concentrations d'hydrogène dans le perméat et dans l'alimentation externe divisé par le rapport de concentrations de butadiène dans le perméat et dans l'alimentation interne) est donc infini, en l'absence de butadiène mesurable: sélectivité idéale et passage préférentiel de l'hydrogène, sans diffusion de l'hydrocarbure.

La membrane selon l'invention montre ainsi des propriétés de séparation particulièrement élevée de toute évidence liée au dépôt sélectif de carbone dans la porosité de la phase zéolithe et/ou dans le voisinage de ladite poriosité. La membrane selon l'invention permet donc ici le passage préférentiel d'hydrogène et il limite le passage de l'hydrocarbure (barrière sélective au passage de l'hydrogène).

### Exemple 5 : utilisation d'une membrane MFI contenant du carbone déposé de manière graduelle, et mise en association avec un catalyseur dans une réaction d'hydrogénation sélective du butadiène (conforme à l'invention).

La membrane inorganique poreuse MFI obtenue dans l'exemple 4 est associée à des grains de catalyseur divisé de type LD271 (2,8g, Axens), à base de palladium supporté sur alumine, lesquels sont introduits dans l'espace interne (aval) de ladite membrane zéolithe sous forme tubulaire. L'alimentation (19,2mUmn, 0,1 MPa, butadiène 10,1%, hydrogène 3,5%, argon 86,4%) est introduite dans l'espace interne (aval) de la membrane, au contact du catalyseur maintenu à 30°C. Le rapport hydrogène sur butadiène vaut 0,34. La vélocité spatiale en poids (en dénomination anglosaxonne Weight Hourly Space Velocity) est 0,1 h⁻¹ (en gramme de butadiène par heure et par gramme de catalyseur). Dans l'espace externe (amont) de la membrane, de l'hydrogène est introduit au contact de la face amont de la membrane (29,0 ml/mn, 0,1 MPa, 100% H₂).

Dans ces conditions, la conversion du butadiène, atteint 99,8% et la sélectivité en produit d'hydrogénation sélective, les butènes, atteint 99,3%. La membrane selon l'invention permet de distribuer l'hydrogène nécessaire pour la réaction vers le catalyseur. La diffusion à travers la membrane se fait de manière contrôlée et permet ainsi d'obtenir des conversions de butadiène élevées, avec des sélectivités en produits d'hydrogénation encore plus élevées que lorsque le carbone est réparti de façon uniforme dans la porosité de la membrane.

## Revendications

1. Membrane inorganique poreuse comportant au moins une phase inorganique douée de propriétés séparatrices **caractérisée en ce qu**'elle présente une teneur en carbone représentant de 0,05 à 25% en poids par rapport à la masse de ladite phase inorganique et en ce que le carbone y est réparti graduellement dans la porosité, la répartition graduelle étant telle que la teneur en carbone représente de 1 à 3 % poids par rapport à la masse du premier tiers de la phase inorganique douée de propriétés séparatrices, de 6 à 8 % poids par rapport à la masse du deuxième tiers de la phase inorganique douée de propriétés séparatrices et de 15 à 20 % poids par rapport à la masse du troisième tiers de la phase inorganique douée de propriétés séparatrices.

2. Membrane inorganique poreuse selon la revendication 1 **caractérisée en ce qu**'elle présente une teneur en carbone représentant de 0,1 à 10% en poids par rapport à la masse de ladite phase inorganique.

3. Membrane inorganique poreuse selon la revendication 2 **caractérisée en ce qu'**elle présente une teneur en carbone représentant de 1 à 8% en poids par rapport à la masse de ladite phase inorganique.

4. Membrane inorganique poreuse selon l'une des revendications 1 à 3 **caractérisée en ce qu**'elle est choisie parmi les membranes zéolithiques, les membranes zéolithiques modifiées, les membranes alumino-silicates, les membranes silice, les membranes alumine et les membranes composites.

5. Membrane inorganique poreuse selon l'une des revendications 1 à 4 **caractérisée en ce qu**'elle est supportée.

6. Membrane inorganique poreuse selon l'une des revendications 1 à 5 **caractérisée en ce qu**'elle présente une taille de pores strictement inférieure à 2 nm.

7. Membrane inorganique poreuse selon l'une des revendications 1 à 5 **caractérisée en ce qu**'elle présente une taille de pores comprise entre 2 et 50 nm.

8. Procédé de préparation d'une membrane inorganique poreuse selon l'une des revendications 1 à 7 comprenant une étape a) consistant en la mise en contact d'une membrane inorganique poreuse dépourvue de carbone et comportant au moins une phase inorganique douée de propriétés séparatrices avec une charge hydrocarbonée, dans une gamme de température comprise entre 20 et 550°C suivie d'une étape b) consistant en la mise en contact de la membrane issue de l'étape a) avec une charge hydrocarbonée dans une gamme de température comprise entre 20 et 550°C, la durée de la mise en contact dans l'étape a) étant comprise entre 1 minute et 3 jours, la durée de la mise en contact dans l'étape b) étant comprise entre 1 minute et 2 jours, la température mise en oeuvre dans l'étape b) étant supérieure à celle mise en oeuvre dans l'étape a), la pression mise en oeuvre dans les étapes a) et b) étant comprise entre 0,1 et 10MPa, la membrane issue de l'étape a) étant maintenue, avant d'être soumise à l'étape b), à une température supérieure à celle pour la mise en oeuvre de l'étape a) pendant une période de 1 minute à 6 heures, le débit de charge hydrocarbonée étant supérieure dans l'étape b) que dans l'étape a).

9. Procédé de préparation selon la revendication 8 tel que ladite charge hydrocarbonée est choisie parmi les oléfines, les polyoléfines, les acétylènes, les polyacétylènes, les aromatiques, les polyaromatiques, les molécules comportant un ou plusieurs noyau(x) aromatique(s) avec une ou plusieurs chaîne(s) hydrocarbonée(s), les molécules hydrocarbonées contenant des hétéroatomes et les molécules hydrocarbonées contenant des groupements fonctionnalisés.

10. Procédé de préparation selon l'une des revendications 8 ou 9 tel que les étapes a) et b) sont réalisées à température constante.

11. Procédé de préparation selon l'une des revendications 8 à 9 tel que les étapes a) et b) sont réalisées par la mise en oeuvre d'une programmation thermique non isotherme.

12. Utilisation d'une membrane selon l'une des revendications 1 à 7 ou préparée selon l'une des revendications 8 à 12 dans la séparation de molécules non-condensables de dimensions inférieures à 0,8 nm contenues dans une charge hydrocarbonée.

13. Utilisation selon la revendication 12 telle que lesdites molécules non-condensables sont choisies parmi l'hydrogène, l'oxygène, l'hélium, l'azote, l'hydrogène sulfuré H2S, le monoxyde de carbone CO, le dioxyde de carbone CO2 et le méthane.

14. Utilisation d'une membrane selon l'une des revendications 1 à 7 ou préparée selon l'une des revendications 8 à 11 en association avec au moins un catalyseur.

15. Utilisation selon la revendication 14 dans des réactions d'hydroconversion d'hydrocarbures.

16. Utilisation selon la revendication 14 dans des réactions d'oxydation.

## Claims

1. A porous inorganic membrane comprising at least one inorganic phase having separating properties, **characterized in that** it has a carbon content representing 0.05% to 25% by weight with respect to the mass of said inorganic phase and **in that** the carbon is distributed in the porosity in a graduated manner, the graduated distribution being such that the carbon content represents 1% to 3% by weight with respect to the mass of the first third of the inorganic phase having separating properties, 6% to 8% by weight with respect to the mass of the second third of the inorganic phase having separating properties and 15% to 20% by weight with respect to the mass of the third of the inorganic phase having separating properties.

2. A porous inorganic membrane according to claim 1, **characterized in that** it has a carbon content representing 0.1 % to 10% by weight with respect to the mass of said inorganic phase.

3. A porous inorganic membrane according to claim 2, **characterized in that** it has a carbon content representing 1% to 8% by weight with respect to the mass of said inorganic phase.

4. A porous inorganic membrane according to one of claims 1 to 3, **characterized in that** it is selected from zeolitic membranes, modified zeolitic membranes, aluminosilicate membranes, silica membranes, alumina membranes and composite membranes.

5. A porous inorganic membrane according to one of claims 1 to 4, **characterized in that** it is supported.

6. A porous inorganic membrane according to one of claims 1 to 5, **characterized in that** it has a pore size that is strictly less than 2 nm.

7. A porous inorganic membrane according to one of claims 1 to 5, **characterized in that** it has a pore size in the range 2 to 50 nm.

8. A process for preparing a porous inorganic membrane according to one of claims 1 to 7, comprising a step a) consisting of bringing a porous carbon-free inorganic membrane comprising at least one inorganic phase having separating properties into contact with a hydrocarbon feed at a temperature in the range 20°C to 550°C, followed by a step b) consisting of bringing the membrane from step a) into contact with a hydrocarbon feed at a temperature in the range 20°C to 550°C, the contact time in step a) being in the range 1 minute to 3 days, the contact period in step b) being in the range 1 minute to 2 days, the pressure employed in steps a) and b) being in the range 0.1 to 10 MPa, the membrane from step a) being maintained, before undergoing step b), at a temperature higher than that employed to carry out step a) for a period of 1 minute to 6 hours, the hydrocarbon flow rate being higher in step b) than in step a).

9. A preparation process according to claim 8, in which said hydrocarbon feed is selected from olefins, polyolefins, acetylenes, polyacetylenes, aromatics, polyaromatics, molecules containing one or more aromatic nuclei with one or more hydrocarbon chains, hydrocarbon molecules containing heteroatoms and hydrocarbon molecules containing functionalized groups.

10. A preparation process according to claim 8 or claim 9, in which steps a) and b) are carried out at constant temperature.

11. A preparation process according to claim 8 or claim 9, in which steps a) and b) are carried out using a non isothermal thermal program.

12. Use of a membrane according to one of claims 1 to 7 or prepared according to one of claims 8 to 11 in separating non-condensable molecules with dimensions of less than 0.8 nm contained in a hydrocarbon feed.

13. Use according to claim 12, in which said non-condensable molecules are selected from hydrogen, oxygen, helium, nitrogen, hydrogen sulphide H₂S, carbon monoxide CO, carbon dioxide CO₂ and methane.

14. Use of a membrane according to one of claims 1 to 7 or prepared in accordance with one of claims 8 to 11 in association with at least one catalyst.

15. Use according to claim 14, in hydrocarbon hydroconversion reactions.

16. Use according to claim 14, in oxidation reactions.

## Patentansprüche

1. Anorganische poröse Membran, die mindestens eine anorganische Phase umfasst, die Trenneigenschaften aufweist, und **dadurch gekennzeichnet ist, dass** sie einen Kohlenstoffgehalt aufweist, der 0,05 bis 25 Gewichtsprozent bezogen auf die Masse der anorganischen Phase darstellt, und **dadurch**, dass der Kohlenstoff darin graduell in der Porosität verteilt ist, wobei die graduelle Verteilung so ist, dass der Kohlenstoffgehalt 1 bis 3 Gewichtsprozent bezogen auf die Masse des ersten Drittels der anorganischen Phase mit Trenneigenschaften darstellt, 6 bis 8 Gewichtsprozent bezogen auf die Masse des zweiten Drittels der anorganischen Phase mit Trenheigenschaften und 15 bis 20 Gewichtsprozent bezogen auf die Masse des dritten Drittels der anorganischen Phase mit Trenneigenschaften.

2. Anorganische poröse Membran nach Anspruch 1, **dadurch gekennzeichnet, dass** sie einen Kohlenstoffgehalt von 0,1 bis 10 Gewichtsprozent bezogen auf die Masse der anorganischen Phase aufweist.

3. Anorganische poröse Membran nach Anspruch 2, **dadurch gekennzeichnet, dass** sie einen Kohlenstoffgehalt von 1 bis 8 Gewichtsprozent bezogen auf die Masse der anorganischen Phase aufweist.

4. Anorganische poröse Membran nach einem der Ansprüche 1 bis 3, **dadurch gekennzeichnet, dass** sie gewählt ist unter den zeolithischen Membranen, den modifizierten zeolithischen Membranen, den Alumo-Silikat-Membranen, den Silizium-Membranen, den Aluminiumoxid-Membranen und den Verbund-Membranen.

5. Anorganische poröse Membran nach einem der Ansprüche 1 bis 4, **dadurch gekennzeichnet, dass** sie auf ein Trägermaterial aufgebracht ist.

6. Anorganische poröse Membran nach einem der Ansprüche 1 bis 5, **dadurch gekennzeichnet, dass** sie eine Porengröße aufweist, die streng unter 2 nm liegt.

7. Anorganische poröse Membran nach einem der Ansprüche 1 bis 5, **dadurch gekennzeichnet, dass** sie eine Porengröße aufweist, die zwischen 2 und 50 nm liegt.

8. Herstellungsverfahren für eine anorganische poröse Membran nach einem der Ansprüche 1 bis 7, das einen Schritt a) umfasst, der darin besteht, eine kohlenstofffreie anorganische poröse Membran, die mindestens eine anorganische Phase umfasst, die Trenneigenschaften aufweist, mit einer Kohlenwasserstoffcharge in Kontakt zu bringen, in einem Temperaturbereich zwischen 20 und 550 °C, gefolgt von einem Schritt b), der darin besteht, die im Schritt a) erhaltene Membran mit einer Kohlenwasserstoffcharge in Kontakt zu bringen, in einem Temperaturbereich zwischen 20 und 550 °C, wobei die Kontaktdauer im Schritt a) zwischen 1 Minute und 3 Tagen liegt, und die Kontaktdauer im Schritt b) zwischen 1 Minute und 2 Tagen liegt, wobei die im Schritt b) verwendete Temperatur höher ist als die im Schritt a) verwendete, wobei der in den Schritten a) und b) angewendete Druck zwischen 0,1 und 10 MPa liegt, wobei die im Schritt a) erhaltene Membran, bevor sie dem Schritt b) unterzogen wird, einer Temperatur ausgesetzt wird, die höher ist als die bei der Durchführung von Schritt a) verwendete, während einer Zeitdauer von 1 Minute bis zu 6 Stunden, wobei der Durchsatz der Kohlenwasserstoffcharge im Schritt b) höher ist als im Schritt a).

9. Herstellungsverfahren nach Anspruch 8, so dass die Kohlenwasserstoffcharge gewählt wird unter den Olefinen, den Polyolefinen, den Acetylenen, den Polyacetylenen, den Aromaten, den Polyaromaten, den Molekülen, die einen oder mehrere aromatische(n) Kern(e) mit einer oder mehreren Kohlenwasserstoffkette(n) umfassen, wobei die Kohlenwasserstoffmoleküle Heteroatome enthalten und die Kohlenwasserstoffmoleküle funktionelle Gruppen enthalten.

10. Herstellungsverfahren nach einem der Ansprüche 8 oder 9, so dass die Schritte a) und b) bei konstantem Druck durchgeführt werden.

11. Herstellungsverfahren nach einem der Ansprüche 8 und 9, so dass die Schritte a) und b) durch Anwendung einer nicht isothermen thermischen Programmierung durchgeführt werden.

12. Verwendung einer Membran nach den Ansprüchen 1 bis 7 oder einer Membran, die nach einem der Ansprüche 8 bis 12 hergestellt ist, zur Abtrennung von nichtkondensierbaren Molekülen, die in einer Kohlenwasserstoffcharge enthalten sind, und deren Abmessungen kleiner sind als 0,8 nm.

13. Verwendung nach Anspruch 12, wobei die nicht kondensierbaren Moleküle gewählt sind unter Wasserstoff, Sauerstoff, Helium, Stickstoff, Schwefelwasserstoff, Kohlenmonoxid CO, Kohlendioxid CO₂ und Methan.

14. Verwendung einer Membran nach einem der Ansprüche 1 bis 7, oder einer Membran, die nach einem der Ansprüche 8 bis 11 hergestellt wurde, in Verbindung mit mindestens einem Katalysator.

15. Verwendung nach Anspruch 14 für Reaktionen zur hydrierenden Umwandlung von Kohlenwasserstoffen.

16. Verwendung nach Anspruch 14 für Oxidationsreaktionen.
